# EUROPÄISCHE PATENTSCHRIFT

(11) **EP 1 934 528 B1**
(45) Veröffentlichungstag und Bekanntmachung des Hinweises auf die Patenterteilung: **16.07.2014**
(21) Anmeldenummer: 06807010.1
(22) Anmeldetag: 05.10.2006
(51) Int. Cl.: F23K 5/14, F02C 7/30

(54) **VERFAHREN UND VORRICHTUNG ZUR ÜBERWACHUNG SICH BILDENDER ABLAGERUNGEN VON FESTSTOFFTEILCHEN, INSBESONDERE IN EINER BRENNSTOFFLEITUNG SOWIE IN DEN BRENNSTOFFVENTILEN EINER GASTURBINE**
METHOD AND DEVICE FOR MONITORING THE DEPOSITION OF SOLID PARTICLES, IN PARTICULAR IN THE FUEL LINE OF A GAS TURBINE
PROCÉDÉ ET DISPOSITIF POUR CONTRÔLER LE DÉPÔT DE PARTICULES SOLIDES, EN PARTICULIER DANS UN TUBE DE COMBUSTIBLE D'UN TURBINE À GAZ

(30) Priorität: 06.10.2005 EP 05021821
(43) Veröffentlichungstag der Anmeldung: 25.06.2008
(73) Patentinhaber: Siemens Aktiengesellschaft, 80333 München (DE)
(72) Erfinder: DIEBELS, Andreas, 46242 Bottrop (DE); PRADE, Bernd, 45478 Mülheim (DE)
(86) Internationale Anmeldenummer: PCT/EP2006/067102
(87) Internationale Veröffentlichungsnummer: WO 2007/039638

(56) Entgegenhaltungen:
- US-A1- 2003 192 300
- US-A1- 2004 031 268
- US-B1- 6 247 919
- US-B1- 6 279 870
- US-B1- 6 632 257

## Beschreibung

Die Erfindung betrifft ein Verfahren zur Überwachung sich bildender Ablagerungen von Feststoffteilchen in einer brennstoffführenden Leitung mit einem Ventil. Die Erfindung betrifft weiterhin eine Vorrichtung zur Überwachung dieser Ablagerungen. Das Verfahren als auch die Vorrichtung sollen in Gasturbinenanlagen und anderen Feuerungsanlagen z.B. Kesselfeuerungen einsetzbar sein. Ein gattungsgemäßes Verfahren und eine gattungsgemäße Vorrichtung sind aus US 20 040 031 268 bekannt.

Eine Gasturbinenanlage umfasst in zumindest einen Verdichter, eine Brennkammer sowie eine Turbine. Im Verdichter erfolgt ein Verdichten von angesaugter Luft, welcher anschließend ein Brennstoff beigefügt wird. In der Brennkammer erfolgt eine Verbrennung des Gemisches. Die Verbrennungsabgase werden anschließend zur Energieerzeugung der Turbine zugeführt.

Gasturbinenanlagen werden heutzutage mit mehrstufigen Brennerkammern ausgestattet, in denen mehrere parallel zueinander zu betreibende Brennerstufen vorhanden sind. Diese können je nach Auslastung der Gasturbinenanlage einzeln oder gemeinsam betrieben werden. Typischerweise umfassen die parallelen Brennerstufen neben mindestens einer Haupt-Brennerstufe zumindest eine Pilotbrennerstufe, wobei der überwiegende Teil des Brennstoffs der Haupt-Brennerstufe zugeführt wird.

Schwankungen in der zugeführten Brennstoffmenge bei der Haupt- und bei der Pilot-Brennerstufe führen durch instabile Verbrennungszustände zu Schwankungen in der Leistung und zu erhöhten NOx-Emissionen. Das Konstanthalten der Leistungen bzw. niedriger NOx-Emissionen geschieht im Allgemeinen durch Regeln der Zufuhr der Brennstoffmenge zur Haupt-Brennstoffstufe und Pilot-Brennstoffzufuhr, welche zu diesem Zweck mit einem in der Größe verstellbaren Ventil ausgestaltet sind. Üblicherweise liegt der Brennstoff gasförmig vor. Neben Feststoffteilchen, die in dem Brennstoff bereits enthalten sind, können z.B. durch Sublimation des Brennstoffs, insbesondere von im Brennstoff enthaltenem Schwefel, Feststoffteilchen ausgebildet werden. Diese können sich im Leitungsinneren festsetzen.

Ablagerungen von Feststoffteilchen in den Brennstoffleitungen führen jedoch zu Verschiebungen der Ventilcharakteristik und damit im Brennstoffsplit, d.h. in der relativen Verteilung des Brennstoffs auf die Brennerstufen. Weiterhin ist die Gefahr gegeben, dass einzelnen Stufen oder Brennern weniger Brennstoff zugeführt wird als für die Verbrennung notwendig ist. Dies führt zu erhöhter Emission und Verbrennungsinstabilitäten. Um das Maß der Ablagerungen zu bestimmen und bei starken Ablagerungen Maßnahmen für die Reinigung zu ergreifen muss bisher die Gasturbinenanlage abgeschaltet werden, was sehr nachteilig ist.

Aufgabe der Erfindung ist daher die Angabe eines servicefreundlichen Verfahrens zur Überwachung der Feststoffteilchen und der damit verbundenen Ablagerungen jedoch möglichst ohne Stillstandzeiten der Anlage in Kauf nehmen zu müssen. Eine weitere Aufgabe ist die Angabe einer Vorrichtung, welche insbesondere diese Überwachung ermöglicht. Das Verfahren als auch die Vorrichtung sollen in einer Gasturbine einsetzbar sein.

Diese auf das Verfahren bezogene Aufgabe wird erfindungsgemäß gelöst durch ein Verfahren zur Überwachung sich bildender Ablagerungen von Feststoffteilchen in einer brennstoffführenden Leitung mit einem Ventil, wobei ein Maß für die Ablagerungen der Feststoffteilchen in der brennstoffführenden Leitung ermittelt wird, indem der Öffnungsgrad des Ventildurchlasses und die durch das Ventil strömende Brennstoffmenge bestimmt und mit einer vorab ermittelten Referenz, welche die ablagerungsfreie Leitung charakterisiert, verglichen werden.

Die Erfindung geht von der Erfahrung aus, dass die durch das Ventil strömende Brennstoffmenge in der Leitung immer angepasst werden muss. Die Ablagerungen bewirken jedoch einen geringeren effektiven Strömungsquerschnitt der Leitung. Damit verbunden ist ein geringer und gestörter Durchfluss des Brennstoffs durch die Leitung. Die Brennstoffmenge soll für einen bestimmten Betriebszustand jedoch möglichst konstant gehalten werden. Um dies zu erreichen wird das Ventil weiter geöffnet als es bei einer ablagerungsfreien Leitung notwendig wäre. Durch den im Vergleich zur ablagerungsfreien Leitung weiteren Öffnungsgrad wird nun eine größere Brennstoffmenge durch das Ventil durchgelassen, um die Brennstoffmenge in der Leitung selber konstant zu halten. Bei ablagerungsfreier Leitung würde der weitere Öffnungsgrad eine Erhöhung der durchgelassenen Brennstoffmenge bedeuten.

Die Erfindung geht von dem Ansatz aus,'dass durch den zusätzlich notwendigen Öffnungsgrad des Ventils, das heißt der Öffnungsgrad des Ventils der mit Ablagerungen behafteten Leitung im Vergleich zu dem Öffnungsgrad der ablagerungsfreien Leitung, das Maß der Ablagerungen bestimmt wird.

Das Maß der Ablagerungen wird nun durch den Öffnungsgrad des Ventils bestimmt. Dazu werden vorab verschiedene Referenzen, welche eine saubere Leitung ohne Ablagerungen charakterisiert, ermittelt. Diese Referenzen werden jeweils in Abhängigkeit von den Randbedienungen, z.B. Art des Brennstoffs bestimmt. Nun wird die durch das Ventil strömende benötigte Brennstoffmenge bei Ablagerung gemessen. Diese wird auf die Referenz angewendet. Daraus lässt sich der theoretische Öffnungsgrad des Ventils bei dieser durchströmenden Brennstoffmenge bei theoretisch ablagerungsfreier Leitung bestimmen. Dieser berechnete Öffnungsgrad wird nun mit dem aktuell vorliegenden Öffnungsgrad des Ventils verglichen. Die Änderung des Öffnungsgrades bei ablagerungsfreier und ablagerungsbehafteter Leitung korreliert mit der Änderung des Brennstoffstroms bei ablagerungsfreier und ablagerungsbehafteter Leitung. Ist die Änderung des Öffnungsgrad daher sehr hoch, so würde durch das ablagerungsfrei angenommene Ventil eine sehr viel größere Menge Brennstoff durchgelassen als ursprünglich notwendig ist, um die Brennstoffmenge in der Leitung konstant zu halten. Daraus folgt, dass sich in der Leitung viele Feststoffteilchen abgelagert haben. Entsprechendes gilt umgekehrt.

Die Bestimmung des Maßes der Ablagerungen erfolgt ohne visuelle Inspektion in beispielsweise einer Gasturbinenanlage, das heißt ohne Abschalten und Stillstandzeiten der Anlage. Dieses Verfahren ermöglicht eine Überwachung der Ablagerungen in situ, so dass rechtzeitige proaktive Maßnahmen bei Zusetzen der Leitung einleitbar sind, jedoch bei gleichzeitiger Verfügbarkeit der Anlage.

In bevorzugter Ausgestaltung wird der Öffnungsgrad des Ventildurchlasses durch den Ventilhub gegeben. Dieser hat den Vorteil, dass er einfach zu bestimmen ist. Im einfachsten Fall wird der Ventilhub durch eine Schiebevorrichtung am Ventil, welche den Ventildurchlass je nach Stellung teilweise abdichtet, dargestellt. Durch Hinein- oder Hinausziehen der Schiebeöffnung wird die Öffnung des Ventildurchlasses bestimmt.

Bevorzugt werden die Betriebsdaten für eine Leitung ohne Ablagerungen ermittelt und gespeichert. Dabei werden verschiedene Parameter der Anlage variiert. Diese Daten werden anschließend für die Bestimmung des Ablagerungsausmaßes verwendet. Diese Betriebsdaten stellen eine bessere Ausgangsbasis als beispielsweise die vom Werk angegebenen Betriebsdaten dar, da so auch die Besonderheiten der Anlage berücksichtig werden können.

Bevorzugt werden als Referenz aus den Betriebsdaten charakteristische Soll-Kennlinien als Referenzfunktion der Brennstoffmenge berechnet. Diese Soll-Kennlinien eignen sich bei sonst gleichen Randbedingungen wie z.B. Verdichterlufttemperatur, den gemessenen Öffnungsgrad des Ventils darauf abzutragen. Damit erhält man nun die für diesen Öffnungsgrad theoretisch (ohne Ablagerungen in der Leitung) durchströmende Brennstoffmenge. Diese kann als Maß für die Bestimmung der Ablagerungen herangezogen werden.

In bevorzugter Ausgestaltung wird die Referenzfunktion normiert. Eine Normierung dieser Funktion ist vorteilhaft, da im Gasturbinenbetrieb die Leistung und somit die benötigte Brennstoffmenge nicht nur vom eingestellten Leistungssollwert, sondern auch von der Verdichterlufttemperatur abhängt. Damit ist eine Langzeitüberwachung möglich.

Bevorzugt wird die Überwachung der Ablagerungen kontinuierlich ausgeführt. Durch die kontinuierliche Überwachung ist ein rechtzeitiges Eingreifen bei sehr starker Ablagerung oder bei auftretenden Ablagerungsanhäufungen, welche sich ungünstig auf das Strömungsverhalten des Brennstoffs auswirken, möglich.

Bevorzugt wird aus der durch das Ventil strömende Brennstoffmenge mittels der charakteristischen Soll-Kennlinie der theoretisch auf die Soll-Kennlinie abgestimmte Durchfluss durch das Ventil berechnet. Dazu wird beispielsweise der Öffnungsgrad des Ventils gemessen, dieser wird auf die Soll-Kennlinie abgetragen. Daraus ergibt sich die Brennstoffmenge bei sauberer Leitung. Als nächster Schritt wird dieser theoretisch berechnete Durchfluss des Brennstoffs durch das Ventil mit dem tatsächlichen Durchfluss vergleichen.

In bevorzugter Ausgestaltung wird der Brennstoff durch eine Brennstoffleitung zugeführt. Diese kann so ausgestaltet sein dass zudem andere brennstoffführende Leitungen versorgt werden können.

In weiterer bevorzugter Ausgestaltung wird mit dem Brennstoff mindestens eine Brennerstufe in einer Brennkammer betrieben. Dabei wird ein Gemisch von Luft und Brennstoff verbrannt welches Heißgas erzeugt. Die Brennstoffmenge wird über die Ventilöffnung geregelt.

Bevorzugt werden mit dem Brennstoff mindestens zwei parallele Brennerstufen in einer Brennkammer betrieben, wobei zumindest einer der Brennerstufen als Pilot-Brennstoffstufe betrieben wird und zumindest einer der Brennerstufe als eine Haupt-Brennstoffstufe betrieben wird. Insbesondere bei Gasturbinenanlagen lassen sich diese Brennerstufen in Hinblick auf das Verfahren vereinfachen. Bei Brennkammern mit mindestens zwei Brennerstufen wird im wesentlichen die Gesamtbrennstoffmenge gemessen. Der Gesamtbrennstoffmenge wird geteilt. Der Großteil des Brennstoffs wird über eine brennstoffführende Leitung mit Ventil der Haupt-Brennerstufe zugeführt. Insbesondere bei Gasturbinen entspricht bei Volllast der Brennstoffteil für die Haupt-Brennerstufe etwa 90- 95 % der Gesamtbrennstoffmenge. Die restlichen 5 -10 % werden der Pilot-Brennerstufe zugeführt. Damit ergibt sich in erster Näherung, dass die gesamte Brennstoffmenge über das Ventil der brennstoffführenden Leitung für die Haupt-Brennerstufe geregelt wird.

Das Verfahren lässt insbesondere eine schnelle und einfache Korrektur des Brennstoffsplits zu. Dies ist für eine stabile Verbrennung wichtig.

Dieses Verfahren wird bevorzugt in einer Gasturbine angewendet. Das wartungsfreundliche Verfahren ermöglicht die Überwachung der Feststoffteilchen und der damit verbundenen Ablagerungen jedoch möglichst ohne Stillstandzeiten.

Diese auf die Vorrichtung bezogene Aufgabe wird erfindungsgemäß gelöst durch eine Vorrichtung gemäß Anspruch 13. Die Vorteile des Verfahrens ergeben sich auch für die Vorrichtung.

Bevorzugt umfasst das Auswertesystem eine Berechnungseinheit zum Ermitteln der Soll-Betriebsdaten in einer äblagerungsfreien Leitung.

In bevorzugter Ausgestaltung umfasst das Auswertesystem eine Berechnungseinheit zum Berechnen der für die durch das Ventil theoretisch strömende Brennstoffmenge auf die Soll-Betriebsdaten abgestimmte Durchfluss der Brennstoffmenge durch das Ventil.

In bevorzugter Ausgestaltung umfasst das Auswertesystem eine Berechnungseinheit zum Ermitteln der Differenz zwischen theoretischer Durchflussmenge von Brennstoff und aktueller Durchflussmenge.

Bevorzugt ist zu der einer brennstoffführenden Leitung mindestens eine weitere brennstoffführende Leitung mit einem Ventil vorgesehen.

In bevorzugter Ausgestaltung ist die brennstoffführende Leitung mit einer Brennstoffleitung zum Zuführen des Brennstoffs ausgestaltet.

Im Folgenden wird die Erfindung beispielhaft anhand einer Zeichnung näher erläutert.

Darin zeigt in vereinfachter und nicht maßstäblicher Darstellung:
- FIG 1: die Vorrichtung und das Verfahren zur Überwachung sich bildender Ablagerungen von Feststoffteilchen
- FIG 2: beispielhaft eine Soll und Ist-Kennlinie.

Gleiche Teile sind in allen Figuren mit denselben Bezugszeichen versehen.

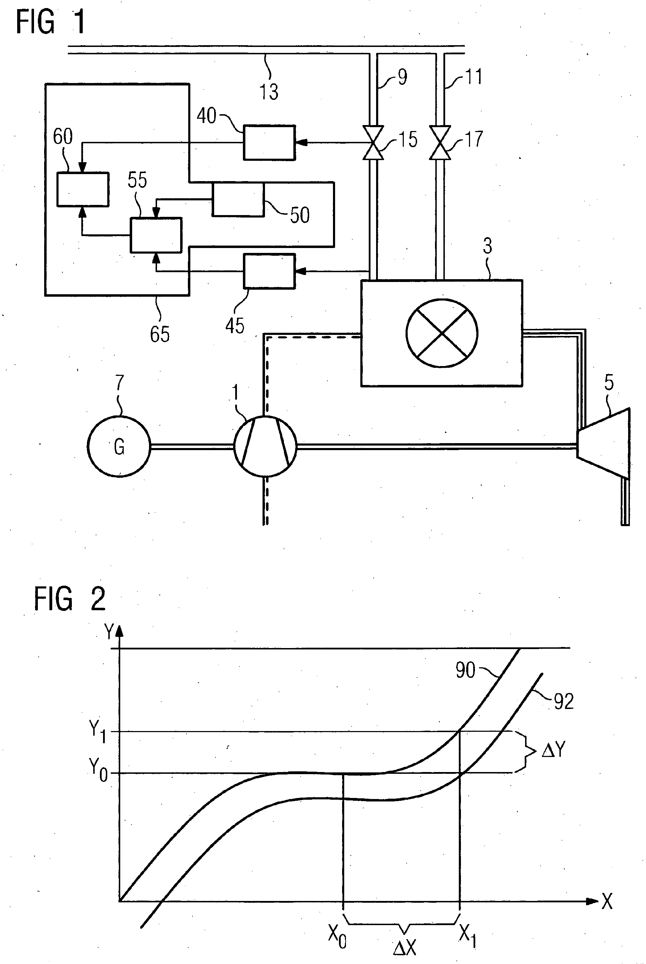

FIG 1 umfasst eine schematische Darstellung einer Gasturbinenanlage. Diese zeigt einen Verdichter 1, eine Brennkammer 3 und eine Turbine 5, die an einen Generator 7 gekoppelt ist. Die im Verdichter 1 verdichtete Luft wird der Brennkammer 3 zugeführt, wo sie mit Brennstoff verbrannt wird, wobei die Verbrennungsabgase der Turbine 5 zugeführt werden. Von der Turbine 5 wird den Verbrennungsabgasen thermische Energie entzogen und in mechanische Energie umgesetzt. Mittels des Generators 7 wird elektrische Energie erzeugt.

Das Verfahren und die Vorrichtung zur Überwachung sich bildender Ablagerungen von Feststoffteilchen werden ebenfalls anhand der FIG 1 erläutert. In FIG 1 handelt es sich um einen Brenner mit zwei Brennerstufen, einer Haupt-Brennerstufe und einer Pilot-Brennerstufe. Insbesondere für Gasturbinen entspricht der Brennstoffanteil für die Haupt-Brennerstufe um etwa 90- 95 % der Gesamtbrennstoffmenge. Die restlichen 5-10 % werden der Pilot-Brennerstufe zugeführt. In erster Näherung ergibt sich so, dass die gesamte Brennstoffmenge über das Ventil 15 der brennstoffführenden Leitung 9 für die Haupt-Brennerstufe geregelt wird. Anhand der Betriebsdaten für eine saubere Maschine, das heißt für ablagerungsfreie Leitungen werden nun die Soll-Betriebsdaten in Abhängigkeit des jeweiligen Ventilhubs und die durch das Ventil gelassenen Brennstoffmenge ermittelt. Mit diesen werden charakteristische Soll-Kennlinien erstellt.

Brennstoff wird zur Verbrennung in der Brennkammer 3 über eine Brennstoffleitung 13 zu zwei Brennstoffzuführleitungen 9,11 geführt, beispielhaft hier dargestellt als Brennstoffzuführleitung 9 für die Hauptbrennerstufe und der Leitung 11 für die Pilotbrennerstufe. Innerhalb der Brennstoffzufuhrleitungen befinden sich zwei Brennstoffregelventile 15,17, welche den

Brennstoffmengendurchlass regeln. Der aktuelle Ventilhub wird über eine Messeinrichtung 40 ermittelt, die aktuelle Brennstoffmenge durch das Ventil über eine Messeinrichtung 45. Setzen sich nun Ablagerungen in der Leitung 9 fest, so führt dies zu einem geringen effektiven Strömungsquerschnitt der Leitung 9. Damit verbunden ist ein gestörter Durchfluss der Brennstoffmenge zur Brennkammer 3. Um dies auszugleichen, das heißt die benötigte Brennstoffmenge der Brennkammer 3 zuzuführen, wird der Ventilhub des Ventils 15 vergrößert, das heißt das Ventil 15 wird weiter geöffnet, als es bei einer ablagerungsfreier Leitung 9 bei denselben Randbedingungen notwendig wäre. Die Messeinheit 45 und die Messeinheit 40 sind mit einem Auswertesystem 65 verbunden. Dieses besteht aus mehreren Berechnungseinheiten, 50,55,60. Die Messeinheit 45 ist mit der Berechnungseinheit 55 verbunden. Die Berechnungseinheit 55 ist weiterhin mit einer Berechnungseinheit 50 verbunden, welcher die Soll-Betriebsdaten und die Soll-Kennlinien hinterlegt sind. Die aus der Messeinheit 45 ermittelte aktuell durch das Ventil 15 durchgelassene Brennstoffmenge wird auf die Soll-Kennlinie abgetragen. Daraus resultiert für diese Brennstoffmenge der theoretische benötigte Ventilhub für eine ablagerungsfreie Leitung 9. Der theoretische benötigte Ventilhub entspricht nun dem Ventilhub für eine ablagerungsfreie Leitung 9. In einer nachfolgenden Berechnungseinheit 60 wird der theoretisch benötigte Ventilhub mit dem aktuell gemessenen Ventilhub, welcher in der Messeinheit 40 ermittelt wurde, verglichen. Dieser Vergleich bildet das Maß für die Ablagerungen in der Leitung 9. Ebenfalls aus diesen Daten ist die Differenz der aktuellen, durchgelassenen Brennstoffmenge bei ablagerungsbehafter Leitung 9 zu der theoretischen durchgelassenen Brennstoffmenge bei ablagerungsfreier Leitung 9 ermittelbar. Dies ermöglicht eine Überwachung der Ablagerungen in der Leitung 9 ohne visuelle Inspektion. Weiterhin ermöglicht dies eine kontinuierliche Überwachung. So lassen sich rechtzeitige proaktive Maßnahmen bei dem zusetzen der Leitung 9 mit Ablagerungen ergreifen. Die Anlage bleibt jedoch bei dieser Überwachung verfügbar. Durch dieses Verfahren lassen sich auch die Ablagerungen in den davor geschalteten Leitungen, welche Brennstoff führen, beispielsweise der Brennstoffleitung 13 dargestellt, ermitteln.

FIG 2 stellt eine charakteristische Kennlinie für die Betriebsdaten einer ablagerungsfreien Leitung 9, die Soll-Kennlinie 90 dar, als auch die charakteristische Kennlinie einer ablagerungsbehafteten Leitung 9, die Ist-Kennlinie 92 dar. Beide Kennlinien 90,92 sind in Abhängigkeit von dem Ventilhub der in X-Richtung aufgetragen ist, und in Abhängigkeit von der durchgelassenen Brennstoffmenge, die in Y-Richtung aufgetragen ist, dargestellt. Die Soll-Kennlinie 90 gibt den Ventilhub in Abhängigkeit von der durchgelassenen Brennstoffmenge für eine ablagerungsfreie Leitung 9 an. Im Brenner wird beispielsweise eine Brennstoffmenge Y₀ benötigt. Bei Betrieb der Brennstoffleitung 13 lagern sich Ablagerungen in der Leitung 9 an. Die Soll-Kennlinie 90 wird dadurch verschoben, da das Ventil 15 weiter geöffnet werden muss um im Brenner die gleiche Brennstoffmenge Y₀ zu erhalten. Diese Verschiebung ist durch die Ist-Kennlinie 92 dargestellt. Mittels der Messeinrichtung 40 wird nun bei der durchgelassenen benötigten Brennstoffmenge Y₀ der aktuelle Ventilhub X₁ gemessen. Durch die Soll-Kennlinie 90 wird nun der theoretisch benötigte Ventilhub X₀ ermittelt. Dieser wird nun mit dem aktuellen Ventilhub X₁ verglichen. Die Differenz ΔX der beiden Ventilhubs X₁,X₀ stellt ein Maß für die Ablagerungen in der Leitung 9 dar. Beim im wesentlichen gleichen Strömungswiderstand in der Leitung 9 ist durch das Auftragen des aktuellen Ventilhubs X₁ auf die Soll-Kennlinie 92 ebenfalls die Brennstoffmengen-Differenz ΔY zwischen der durchgelassenen Brennstoffmenge Y₀ und der theoretisch bei ablagerungsfreier Leitung 9 durchgelassenen Brennstoffmenge Y₁ bekannt. Dies ist ebenfalls ein Maß für die Ablagerungen in der Leitung 9 und kann zur Überwachung dieser Ablagerungen herangezogen werden.

Die Erfindung betrifft ein Verfahren und eine Vorrichtung zur Überwachung sich bildender Ablagerungen von Feststoffteilchen in einer brennstoffführenden Leitung. Dieses ermöglicht es ein Zusetzen der Leitungen bzw. Ventile zu überwachen um rechtzeitig proaktive Maßnahmen zu ergreifen. Es ist nicht notwenig die Anlage abzuschalten. Weiterhin kann mit der Erfindung eine Korrektur des Brennstoffsplits einfach und schnell vorgenommen werden.

## Patentansprüche

1. Verfahren zur Überwachung sich bildender Ablagerungen von Feststoffteilchen in einer brennstoffführenden Leitung (9) mit einem Ventil (15), in dem der Öffnungsgrad des Ventildurchlasses und die durch das Ventil strömende Brennstoffmenge bestimmt wird,
**dadurch gekennzeichnet, dass** ein Maß für die Ablagerungen der Feststoffteilchen in der brennstoffführenden Leitung (9) ermittelt wird, indem der Öffnungsgrad des Ventildurchlasses und die durch das Ventil strömende Brennstoffmenge mit einer vorab ermittelten Referenz, welche die ablagerungsfreie Leitung (9) charakterisiert, verglichen werden.

2. Verfahren nach Anspruch 1,
**dadurch gekennzeichnet, dass** der Öffnungsgrad des Ventildurchlasses durch den Ventilhub gegeben ist.

3. Verfahren nach einem der vorhergehenden Ansprüche,
**dadurch gekennzeichnet, dass** die Betriebsdaten für eine Leitung (9) ohne Ablagerungen ermittelt und gespeichert werden.

4. Verfahren nach Anspruch 3,
**dadurch gekennzeichnet, dass** als Referenz aus den Betriebsdaten charakteristische Soll-Kennlinien (90) als Referenzfunktion der Brennstoffmenge berechnet werden.

5. Verfahren nach Anspruch 4,
**dadurch gekennzeichnet, dass** die Referenzfunktion normiert wird.

6. Verfahren nach Anspruch 5, mit den Schritten
- Berechnung aus der durch das Ventil strömende Brennstoffmenge mittels der charakteristischen Soll-Kennlinie (90), - des theoretisch auf die Soll-Kennlinie (90) abgestimmten Durchflusses durch das Ventil (15),
- Vergleich dieses theoretisch berechneten Durchflusses des Brennstoffs durch das Ventil (15) mit dem tatsächlichen Durchfluss.

7. Verfahren nach Anspruch 5,
**dadurch gekennzeichnet, dass** die Überwachung der Ablagerungen kontinuierlich aufgeführt wird.

8. Verfahren nach einem der vorhergehenden Ansprüche,
**dadurch gekennzeichnet, dass** der Brennstoff durch eine Brennstoffleitung (13) zugeführt wird.

9. Verfahren nach einem der vorhergehenden Ansprüche,
**dadurch gekennzeichnet, dass** mit dem Brennstoff mindestens eine Brennerstufe in einer Brennkammer (3) betrieben wird.

10. Verfahren nach einem der Ansprüche 1-8,
**dadurch gekennzeichnet, dass** mit dem Brennstoff mindestens zwei parallele Brennerstufen in einer Brennkammer (3) betrieben werden, wobei
- zumindest einer der Brennerstufen als Pilot-Brennstoffstufe betrieben wird und
- zumindest einer der Brennerstufe als eine Haupt- Brennstoffstufe betrieben wird.

11. Verfahren nach einem der vorhergehenden Ansprüche,
**dadurch gekennzeichnet, dass** eine Korrektur des Brennstoffsplits ermöglicht wird.

12. Verfahren nach einem der vorhergehenden Ansprüche,
**dadurch gekennzeichnet, dass** das Verfahren in einer Gasturbine angewendet wird.

13. Vorrichtung zur Überwachung sich bildender Ablagerungen von Feststoffteilchen in einer brennstoffführenden Leitung (9) mit einem Ventil (15), die eine Messeinrichtung (45) zur Bestimmung des aktuellen Brennstoffflusses und eine Messeinrichtung (40) zur Bestimmung der aktuellen Ventilstellung aufweist sowie ein Auswertesystem (65) umfasst, wobei die Messeinrichtungen (45, 40) mit dem Auswertesystem (65) verbunden sind,
**dadurch gekennzeichnet, dass** das Auswertesystem ein Maß für die Ablagerungen der Feststoffteilchen in der brennstoffführenden Leitung (9) ermittelt, indem der Öffnungsgrad des Ventildurchlasses und die durch das Ventil strömende Brennstoffmenge mit.einer vorab ermittelten Referenz, welche die ablagerungsfreie Leitung (9) charakterisiert, verglichen werden.

14. Vorrichtung nach Anspruch 13,
**dadurch gekennzeichnet, dass** der Brennstoff gasförmig ist.

15. Vorrichtung nach Anspruch 13,
**dadurch gekennzeichnet, dass** der Brennstoff flüssig ist.

16. Vorrichtung nach einem der Ansprüche 13-15,
**dadurch gekennzeichnet, dass** das Auswertesystem (65) eine Berechnungseinheit (50) zum Ermitteln der Betriebsdaten in einer ablagerungsfreien Leitung (9) umfasst.

17. Vorrichtung nach einem der Ansprüche 13-16,
**dadurch gekennzeichnet, dass** das Auswertesystem (65) eine Berechnungseinheit (55) zum Berechnen der für die durch das Ventil strömende Brennstoffmenge theoretischen auf die ablagerungsfreien Betriebsdaten abgestimmte Durchfluss der Brennstoffmenge durch das Ventil (15) umfasst.

18. Vorrichtung nach einem der Ansprüche 13-17,
**dadurch gekennzeichnet, dass** das Auswertesystem (65) eine Berechnungseinheit (60) zum Ermitteln der Differenz zwischen theoretischer Durchflussmenge von Brennstoff und aktueller Durchflussmenge umfasst.

19. Vorrichtung nach einem der Ansprüche 13-18,
**dadurch gekennzeichnet, dass** das zu der einen brennstoffführenden Leitung (9) mindestens eine weitere brennstoffführenden Leitung (11) mit einem Ventil (17) vorgesehen ist.

20. Vorrichtung nach einem der Ansprüche 13-19,
**dadurch gekennzeichnet, dass** die brennstoffführende Leitung (9) mit einer Brennstoffleitung (13) zum Zuführen des Brennstoffs ausgestaltet ist.

21. Brennkammer (3) mit einer Vorrichtung nach einem der vorhergehenden Ansprüche 13-20.

22. Gasturbine mit einer Brennkammer (4) nach Anspruch 21.

## Claims

1. Method for monitoring the formation of deposits of solid particles in a fuel feed line (9) incorporating a valve (15) in which the degree of opening of the valve passageway and the fuel flow through the valve is determined,
**characterised in that** a measure for the deposits of solid particles in the fuel feed line (9) is ascertained by comparing the degree of opening of the valve passageway and the fuel flow through the valve with a previously ascertained reference characterising the deposit-free line (9).

2. Method according to claim 1,
**characterised in that** the degree of opening of the valve passageway is given by the valve stroke.

3. Method according to one of the preceding claims,
**characterised in that** the operating data for a line (9) without deposits is ascertained and stored.

4. Method according to claim 3,
**characterised in that**, as a reference, setpoint characteristic curves (90) are calculated from the operating data as a reference function of the fuel flow.

5. Method according to claim 4,
**characterised in that** the reference function is normalised.

6. Method according to claim 5, comprising the following steps
- calculating from the fuel flow through the valve, by means of the setpoint characteristic curve (90), the flow through the valve (15) theoretically matched to the setpoint characteristic curve (90),
- comparing this theoretically calculated fuel flow through the valve (15) with the actual flow.

7. Method according to claim 5,
**characterised in that** monitoring of the deposits is carried out continuously.

8. Method according to one of the preceding claims,
**characterised in that** the fuel is delivered by a fuel line (13).

9. Method according to one of the preceding claims,
**characterised in that** at least one burner stage in a combustion chamber (3) is operated using the fuel.

10. Method according to one of claims 1-8,
**characterised in that** at least two parallel burner stages in a combustion chamber (3) are operated using the fuel, wherein
- at least one of the burner stages is operated as a pilot fuel stage and
- at least one of the burner stages is operated as a main fuel stage.

11. Method according to one of the preceding claims,
**characterised in that** it is possible to correct the fuel split.

12. Method according to one of the preceding claims,
**characterised in that** the method is used in a gas turbine.

13. Device for monitoring the formation of deposits of solid particles in a fuel feed line (9) incorporating a valve (15), which device has a measuring device (45) for determining the current fuel flow and a measuring device (40) for determining the current valve position as well as an evaluation system (65), the measuring devices (45, 40) being connected to the evaluation system (65),
**characterised in that** the evaluation system ascertains a measure for the deposits of solid particles in the fuel feed line (9) by comparing the degree of opening of the valve passageway and the fuel flow through the valve with a previously ascertained reference characterising the deposit-free line (9).

14. Device according to claim 13,
**characterised in that** the fuel is gaseous.

15. Device according to claim 13,
**characterised in that** the fuel is liquid.

16. Device according to one of claims 13-15,
**characterised in that** the evaluation system (65) comprises a calculating unit (50) for ascertaining the operating data in a deposit-free line (9).

17. Device according to one of claims 13-16,
**characterised in that** the evaluation system (65) comprises a calculating unit (55) for calculating the theoretical fuel flow through the valve (15), matched to the deposit-free operating data, for the fuel flow through the valve.

18. Device according to one of claims 13-17,
**characterised in that** the evaluation system (65) has a calculating unit (60) for ascertaining the difference between theoretical fuel flow and current fuel flow.

19. Device according to one of claims 13-18,
**characterised in that** in addition to the one fuel feed line (9), at least one other fuel feed line (11) is provided with a valve (17).

20. Device according to one of claims 13-19,
**characterised in that** the fuel feed line (9) is embodied with a fuel line (13) for delivering the fuel.

21. Combustion chamber (3) with a device according to one of the preceding claims 13-20.

22. Gas turbine with a combustion chamber (4) according to claim 21.

## Revendications

1. Procédé de contrôle de dépôts en formation de particules de matière solide dans un conduit (9) conduisant du combustible ayant une soupape (15), dans lequel on détermine le degré d'ouverture du passage de la soupape et la quantité de combustible passant dans la soupape,
**caractérisé en ce que** l'on détermine une mesure des dépôts de particule solide dans le conduit (9) conduisant du combustible, en comparant le degré d'ouverture du passage de la soupape et la quantité de combustible passant dans la soupape à une référence qui a été déterminée auparavant et qui caractérise le conduit (9) sans dépôt.

2. Procédé suivant la revendication 1,
**caractérisé en ce que** le degré d'ouverture du passage de la soupape est donné par la levée de la soupape.

3. Procédé suivant l'une des revendications précédentes,
**caractérisé en ce que** l'on détermine les données de fonctionnement pour un conduit (9) sans dépôt et on les mémorisent.

4. Procédé suivant la revendication 3,
**caractérisé en ce que** l'on calcule comme référence, à partir des données de fonctionnement, des courbes (90) caractéristiques de consigne sous la forme d'une fonction de référence de la quantité de combustible.

5. Procédé suivant la revendication 4,
**caractérisé en ce que** l'on norme la fonction de référence.

6. Procédé suivant la revendication 5, comprenant les stades
- de calcul, à partir de la quantité de combustible passant dans la soupape au moyen de la courbe (90) caractéristique de consigne, du débit passant dans la soupape (15) adapté théoriquement à la courbe (90) caractéristique de consigne,
- de comparaison de ce débit calculé théoriquement du combustible passant dans la soupape (15) au débit réel.

7. Procédé suivant la revendication 5,
**caractérisé en ce que** l'on effectue en continu le contrôle des dépôts.

8. Procédé suivant l'une des revendications précédentes,
**caractérisé en ce que** l'on apporte le combustible par un conduit (13) pour du combustible.

9. Procédé suivant l'une des revendications précédentes,
**caractérisé en ce qu'**au moins un étage de brûleur d'une chambre de combustion (3) fonctionne avec le combustible.

10. Procédé suivant l'une des revendications 1 à 8,
**caractérisé en ce qu'**au moins deux étages de brûleur en parallèle dans une chambre de combustion (3) fonctionnent avec le combustible, dans lequel
- au moins l'un des étages de brûleur fonctionne en étage de combustible pilote et
- au moins l'un des étages de brûleur fonctionne en étage de combustible principal.

11. Procédé suivant l'une des revendications précédentes,
caractérisé en qu'une correction du split de combustible est rendue est possible.

12. Procédé suivant l'une des revendications précédentes,
**caractérisé en ce que** l'on applique le procédé dans une turbine à gaz.

13. Dispositif de contrôle de dépôts en formation de particules de matière solide dans un conduit (9) conduisant du combustible ayant une soupape (15) qui comprend un dispositif (45) de mesure pour la détermination du débit présent de combustible et un dispositif (40) de mesure pour la détermination de la position présente de la soupape, ainsi qu'un système (65) d'exploitation, les dispositifs (45, 40) de mesure étant reliés au système (65) d'exploitation, **caractérisé en ce que** le système d'exploitation détermine une mesure des dépôts de particules de matière solide dans le conduit (9) conduisant du combustible, en comparant le degré d'ouverture du passage de la soupape et la quantité de combustible passant dans la soupape à une référence déterminée à l'avance, qui caractérise le conduit (9) sans dépôt.

14. Dispositif suivant la revendication 13,
**caractérisé en ce que** le combustible est gazeux.

15. Dispositif suivant la revendication 13,
**caractérisé en ce que** le combustible est liquide.

16. Dispositif suivant l'une des revendications 13 à 15,
**caractérisé en ce que** le système (65) d'exploitation comprend une unité (50) de calcul pour la détermination des données de fonctionnement dans un conduit (9) sans dépôt.

17. Dispositif suivant l'une des revendications 13 à 16, **caractérisé en ce que** le système (65) d'exploitation comprend une unité (55) de calcul pour le calcul du débit de la quantité de combustible passant dans la soupape (15) adapté aux données de fonctionnement sans dépôt théoriquement pour la quantité de combustible passant dans la soupape.

18. Dispositif suivant l'une des revendications 13 à 17,
**caractérisé en ce que** le système (65) d'exploitation comprend une unité (60) de calcul pour déterminer la différence entre le débit théorique de combustible et le débit présent.

19. Dispositif suivant l'une des revendications 13 à 18,
**caractérisé en ce qu'**au moins un autre conduit (11) conduisant du combustible ayant une soupape (17) est prévu en plus du conduit (9) conduisant du combustible.

20. Dispositif suivant l'une des revendications 13 à 19,
**caractérisé en ce que** le conduit (9) conduisant du combustible est conformé en conduit (13) pour apporter du combustible.

21. Chambre de combustion (3) ayant un dispositif suivant l'une des revendications 13 à 20 précédentes.

22. Turbine à gaz ayant une chambre de combustion (4) suivant la revendication 21.
